# FASCICULE DE BREVET EUROPEEN

(11) **EP 3 619 479 B1**
(45) Date de publication et mention de la délivrance du brevet: **16.11.2022**
(21) Numéro de dépôt: 18732837.2
(22) Date de dépôt: 02.05.2018
(51) Int. Cl.: F24H 3/00, F24D 13/02, H05B 3/26, H05B 3/16

(54) **MODULE CHAUFFANT POUR APPAREIL DE CHAUFFAGE ÉLECTRIQUE**
HEIZMODUL FÜR EINE ELEKTRISCHE HEIZVORRICHTUNG
HEATING MODULE FOR ELECTRIC HEATING DEVICE

(30) Priorité: 05.05.2017 FR 1753984
(43) Date de publication de la demande: 11.03.2020
(73) Titulaire: Texas de France (CAS), 13854 Aix en Provence (FR)
(72) Inventeur: BLOUIN, Philippe, 13510 Eguilles (FR); VIENNET, Raphaël, 13100 Aix en Provence (FR)
(74) Mandataire: Roman, Alexis
(86) Numéro de dépôt international: PCT/FR2018/000105
(87) Numéro de publication internationale: WO 2018/202961

(56) Documents cités:
- EP-A1- 1 067 822
- EP-A1- 2 600 689
- EP-A2- 0 483 621
- EP-A2- 1 845 752
- WO-A1-03/017725
- FR-A1- 3 027 184
- FR-A3- 2 924 891
- US-A- 3 821 517
- US-A- 3 872 281
- US-A- 4 311 900
- US-A1- 2013 146 578

## Description

### Domaine technique de l'invention.

L'invention a pour objet un procédé de fabrication d'un module chauffant pour appareil de chauffage électrique

Elle concerne plus particulièrement, quoique non exclusivement, le domaine technique des appareils de chauffage et plus particulièrement celui des radiateurs électriques.

### État de la technique.

Le document brevet FR2924891 (BIURTUS) décrit un radiateur électrique intégrant un module électrique chauffant comprenant un élément résistif chauffant isolé électriquement contenu dans une gaine linéaire présentant un rétrécissement central. En pratique, la dissipation de la chaleur avec ce type de module chauffant n'est pas optimale.

Des modules chauffant de conception et performances similaires sont également décrits dans les documents brevet EP0483621 (WATLOW), EP2600689 (MARIN), US4311900 (HUMMEL), US3872281 (KRIEG) ou FR3027184 (TEXAS DE FRANCE).

On connaît plus particulièrement par le document brevet EP1067822 (MULLER) un module chauffant pour appareil de chauffage, comprenant un corps en fonte formant dissipateur thermique, à l'intérieur duquel est intégré un élément résistif chauffant isolé électriquement. Ce type de module chauffant est obtenu par un procédé consistant à placer dans un moule une résistance électrique faisant office de noyau, laquelle résistance comporte au moins une enveloppe en matériau fusible. On coule ensuite dans le moule une fonte à température de fusion sensiblement équivalente à celle de l'enveloppe de la résistance électrique, cette enveloppe présentant une épaisseur et une inertie thermique suffisantes pour permettre une fusion superficielle de l'enveloppe sans la détériorer. La fusion superficielle de l'enveloppe de la résistance au contact de la fonte, assure une liaison intime entre les matériaux procurant une efficacité optimale des transferts thermiques.

Ce module chauffant a comme principaux avantages d'avoir un encombrement réduit et d'offrir une bonne dissipation de la chaleur. Aussi, ce module chauffant peut être facilement intégré dans des appareils de chauffage et notamment des radiateurs électriques plats.

Toutefois, le procédé de fabrication précité est extrêmement complexe car il nécessite de mettre en oeuvre une technique de moulage de haute précision. Il en résulte que ce type de module chauffant est d'un prix de revient élevé. Le document WO 03/017725 A1 divulgue toutes les caractéristiques mentionnées dans le préambule de la revendication 1. Dans D1, l'élément résistif chauffant (1) se présente sous la forme d'un ruban résistif (3) bobiné sur un unique support isolant (4), les extrémités dudit ruban étant chacune situées sur un côté opposé dudit support.

Ainsi le raccordement des connecteurs au boîtier électronique de gestion dans D1 n' est pas sans difficulté.

L'invention vise à remédier à cet état des choses. En particulier, un objectif de l'invention est de proposer un module chauffant dont l'encombrement est réduit et permet une bonne dissipation de la chaleur, mais dont le coût de revient est bas et dont le procédé de fabrication est simple et facile à mettre en oeuvre. De plus l'objectif de l'invention est de proposer un procédé de fabrication d'un module chauffant permettant un raccordement à un boîtier électronique de gestion simplifié, et permettant aussi que l'encombrement de son élément résistif chauffant puisse être réduit lors de son stockage.

### Divulgation de l'invention.

La solution proposée par l'invention est un procédé de fabrication d'un module chauffant selon la revendication 1.

D'autres caractéristiques de l'invention sont listées ci-dessous.
- l'élément résistif chauffant est formé par au moins un fil ou ruban résistif enroulé autour d'une paire de feuilles support isolantes, lesquelles feuilles sont disposées côte-à-côte, dans un même plan, et en miroir.
- l'isolation électrique de l'élément résistif chauffant est formée par deux premières feuilles isolantes respectivement disposées de part et d'autre dudit élément résistif chauffant de manière à prendre en sandwich celui-ci ; les dimensions en longueur et en largeur des premières feuilles isolantes sont supérieures à celles de l'élément résistif chauffant de sorte que les bords périphériques dudit élément résistif chauffant se trouvent en retrait des bords périphériques desdites premières feuilles.
- Ces premières feuilles isolantes peuvent être assemblées entre elles au moyen d'organes d'assemblage, préférentiellement des agrafes métalliques, lesquels organes d'assemblage sont disposés au niveau des bords périphériques des premières feuilles faisant saillie extérieurement des bords périphériques de l'élément résistif chauffant, de sorte que lesdits organes d'assemblage ne soient pas en contact avec ledit élément résistif chauffant.
- Les agrafes métalliques peuvent perforer simultanément les premières feuilles isolantes et les feuilles support isolantes.
- Préférentiellement, la longueur des plaques en fonte est comprise entre 150 mm et 750 mm, leur largeur comprise entre 50 mm et 350 mm et leur épaisseur comprise entre 2 mm et 20 mm.
- Le module chauffant peut également comporter, en tant que seconde isolation électrique, deux secondes feuilles isolantes disposées respectivement de part et d'autre de l'élément résistif chauffant isolé électriquement de manière à prendre en sandwich celui-ci ; les dimensions en longueur et en largeur des secondes feuilles isolantes sont supérieures à celles de l'élément résistif chauffant isolé électriquement de sorte que les bords périphériques dudit élément résistif chauffant isolé électriquement se trouvent en retrait des bords périphériques desdites secondes feuilles.
- Ces secondes feuilles isolantes peuvent être assemblées entre elles au moyen d'organes d'assemblage, préférentiellement des agrafes métalliques, lesquels organes d'assemblage sont disposés au niveau des bords périphériques des secondes feuilles faisant saillie extérieurement des bords périphériques de l'élément résistif chauffant isolé électriquement, de sorte que lesdits organes d'assemblage ne soient pas en contact avec ledit élément résistif chauffant isolé électriquement.
- Les agrafes métalliques peuvent perforer simultanément les secondes feuilles isolantes, les premières feuilles isolantes et les feuilles support isolantes.
- Les secondes feuilles isolantes peuvent être solidarisées aux premières feuilles isolantes au moyen d'un adhésif.
- Préférentiellement, un évidement est réalisé dans la paroi interne de chacune des plaques, lesquels évidements se juxtaposent, après assemblage desdites plaques, pour former un aménagement dans lequel se loge l'élément résistif chauffant isolé électriquement.
- Avantageusement, la profondeur des évidements est au plus égale, préférentiellement inférieure, à la moitié de l'épaisseur de l'élément résistif chauffant isolé électriquement.
- Les deux plaques peuvent être assemblées entre elles au moyen d'un adhésif disposé sur la bordure interne desdites plaques. Cet adhésif peut être un joint souple en silicone, disposé de manière continue ou discontinue le long des bords périphériques internes des plaques en fonte.

Un autre aspect concerne un radiateur électrique dans lequel est installé un module chauffant, lequel module chauffant comprend :
- un corps en fonte formant dissipateur thermique,
- un élément résistif chauffant isolé électriquement est installé dans le corps de sorte que la chaleur fournie par ledit élément résistif chauffant soit transmise audit corps,
- le corps est formé par un assemblage de deux plaques en fonte disposées respectivement de part et d'autre de l'élément résistif chauffant isolé électriquement, de sorte que l'assemblage desdites plaques prenne en sandwich et comprime ledit élément résistif chauffant isolé électriquement.

Ce radiateur peut comporter une face avant et un châssis arrière, et dans lequel :
- le module chauffant est maintenu à distance de la face interne du châssis arrière par des plots réalisés dans un matériau isolant électrique
- les plots présentent des tiges filetées qui font saillie perpendiculairement à la face interne du châssis arrière, lesquelles tiges traversent les plaques en fonte au niveau de réservations.
- des écrous sont vissés au niveau des extrémités des tiges qui dépassent des plaques en fonte, leur vissage venant plaquer le module chauffant contre les plots.

L'invention concerne un procédé de fabrication selon la revendication 1.

Encore un autre aspect de l'invention concerne un procédé de fabrication d'un module chauffant, consistant à agrafer trois des quatre bords des premières feuilles isolantes de manière à former une poche, pochette ou chemise à l'intérieur de laquelle est inséré l'élément résistif chauffant, puis à agrafer le quatrième bord desdites premières feuilles isolantes pour fermer l'ensemble et maintenir l'élément résistif chauffant en position, emprisonné et serré entre lesdites premières feuilles isolantes.

Encore un autre aspect de l'invention concerne un procédé de fabrication d'un module chauffant, consistant à agrafer trois des quatre bords des secondes feuilles isolantes de manière à former une poche, pochette ou chemise à l'intérieur de laquelle est inséré l'élément résistif chauffant isolé par les premières feuilles isolantes, puis à agrafer le quatrième bord desdites secondes feuilles isolantes pour fermer l'ensemble.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective d'un radiateur,
- la figure 2 est une vue en perspective d'un module chauffant,
- la figure 3 est une vue en perspective d'un élément résistif chauffant
- la figure 4a est une vue en perspective éclatée de l'élément résistif chauffant de la figure 1, et de premières feuilles isolantes formant une première isolation électrique,
- la figure 4b est une vue en perspective montrant l'élément résistif chauffant pris en sandwich entre les premières feuilles isolantes,
- la figure 5a est une vue en perspective éclatée de l'élément résistif chauffant de la figure 1, des premières feuilles isolantes formant une première isolation électrique, et des secondes feuilles isolantes formant une seconde isolation électrique,
- la figure 5b est une vue en perspective montrant l'élément résistif chauffant pris en sandwich entre les premières feuilles isolantes et les secondes feuilles isolantes,
- la figure 6 est une vue en perspective éclatée de l'assemblage de la figure 5b et de deux plaques formant le corps de dissipation thermique,
- la figure 7 est une vue en perspective d'une plaque formant le corps de dissipation thermique, selon un mode particulier de réalisation,
- la figure 8a est une vue en coupe montrant l'empilement des différents éléments constitutifs du module chauffant, selon un mode de réalisation,
- la figure 8b montre l'empilement de la figure 8a à l'état assemblé,
- la figure 9a est une vue en coupe montrant l'empilement des différents éléments constitutifs du module chauffant, selon un autre mode de réalisation,
- la figure 9b montre l'empilement de la figure 9a à l'état assemblé,
- la figure 10 est une vue éclatée d'un radiateur le module chauffant étant détaché du châssis arrière dudit radiateur,
- la figure 11 montre le radiateur de la figure 10 avec le module chauffant fixé sur le châssis arrière dudit radiateur.

### Modes préférés de réalisation de l'invention.

Dans la suite de la description, les termes « *supérieur(e)linférieur(e)* », *droit(e)*/*gauche », « hautlbas », « avant*/*arrière »* et de manière générale les termes désignant une référence spatiale, concernent la position dans laquelle les éléments apparaissent sur les figures annexées. Cette position peut toutefois être différente après la pose finale du radiateur.

Par souci de clarté et de concision, la suite de la description fait référence à un radiateur électrique. Toutefois le module chauffant peut être utilisé dans d'autres appareils de chauffage, par exemple un chauffe-eau électrique, ou un appareil de chauffage à air pulsé.

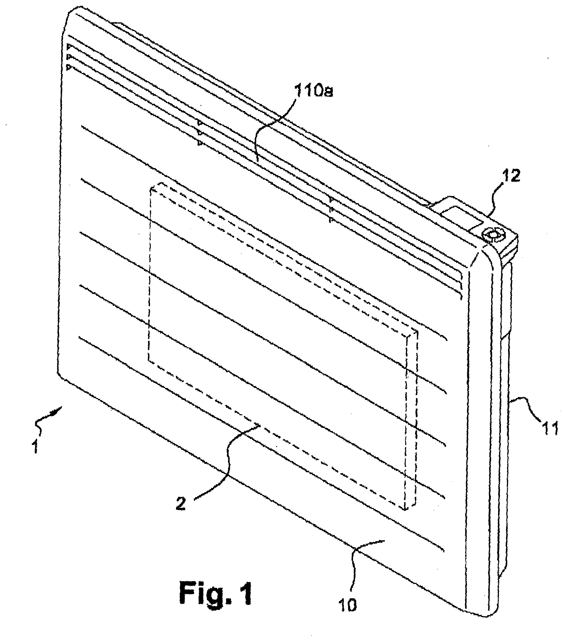

Sur les figures 1, 10 et 11, l'appareil de chauffage est un radiateur électrique à inertie sèche dans lequel est intégré le module chauffant conforme à l'invention. Ce type de module chauffant peut également être dénommé « coeur de chauffe ».

Le radiateur 1 comprend une façade avant 10 fixée sur un châssis arrière 11. Ce dernier est notamment adapté pour être fixé contre un mur d'une pièce à chauffer à l'aide d'un support mural.

La façade 10 consiste en une tôle métallique ou une plaque de verre réalisée d'un seul tenant ou en plusieurs parties. La façade 10 est chauffée par le module chauffant 2 et son rayonnement assure une répartition homogène de la chaleur dans la pièce à chauffer. Avantageusement, des aérations 110a, disposées dans la partie supérieure de la façade 10, permettent une convection naturelle de la chaleur émise par le coeur minéral de chauffe.

Le châssis 11 consiste préférentiellement en une tôle métallique pliée et/ou emboutie et sur laquelle est fixée la façade avant 10, par exemple par vissage ou rivetage. Le châssis 11 peut être pourvu, dans sa partie inférieure, d'entrées d'air 111a qui contribuent, avec les aérations 110a, à assurer une convection naturelle à l'intérieur du radiateur 1. La façade avant 10 et le châssis arrière 11 délimitent un logement interne dans lequel est installé le module chauffant 2.

Un boîtier électronique de gestion 12 est avantageusement installé sur le châssis 11, au niveau d'une réservation prévue à cet effet. Ce boîtier 12 est adapté pour contrôler le fonctionnement du module chauffant 2 et permet notamment de contrôler la température de chauffage (thermostat) et/ou des plages de fonctionnement (programmateur).

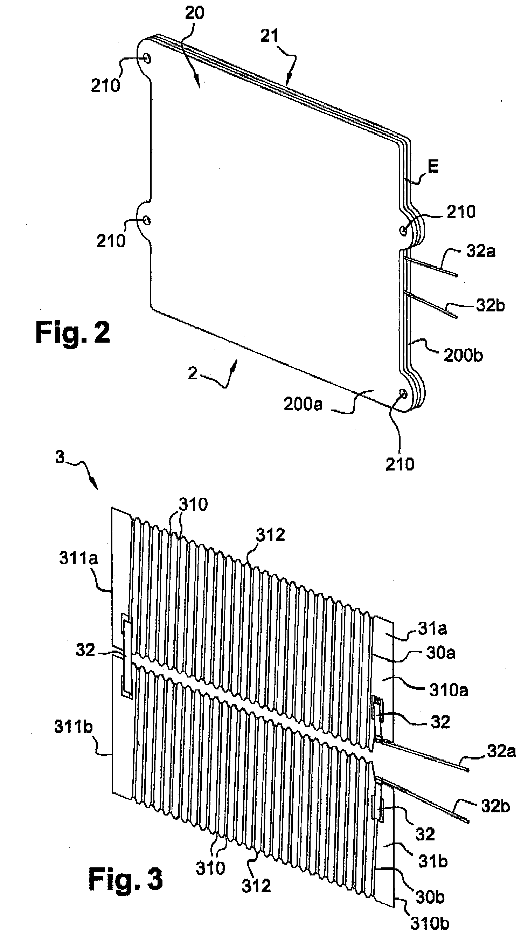

Le module chauffant 2 est illustré sur la figure 2. Il a une forme générale parallélépipédique. Son poids est compris entre 4 kg et 20 kg. Il présente une face avant 20 et une face arrière 21. La face avant 20 est destinée à être en regard de la façade 10 du radiateur 1 et la face arrière en regard du châssis 11.

Le module chauffant 2 est formé d'un assemblage de deux plaques 200a, 200b, agencées en sandwich. Ces plaques sont symétriques 200a, 200b et forment, après assemblage, un corps de dissipation thermique. Elles sont réalisées à partir d'un alliage métallique qui est avantageusement de la fonte et préférentiellement une fonte grise notamment choisie pour sa facilité de moulage et ses bonnes propriétés de dissipation thermique. D'autres alliages métalliques peuvent toutefois être utilisés comme des aciers, des alliages d'aluminium, des alliages de laiton, des alliages de magnésium, etc. Pour limiter les coûts de fabrication, ces plaques 200a, 200b sont obtenues par moulage. Un usinage de leur face interne peut être envisagé afin de s'assurer d'une bonne planéité et/ou pour réaliser les évidements décrits ci-après dans la description.

La figure 3 illustre un élément résistif chauffant 3 intégré dans le module chauffant 2, et plus particulièrement dans le corps formé les deux plaques 200a, 200b. L'élément résistif chauffant 3 est plat et mince, son épaisseur étant par exemple comprise entre 1 mm et 5 mm. Il comporte au moins un fil ou ruban résistif 30a, 30b, nu et conducteur, par exemple réalisé en métal, et dont l'épaisseur (ou diamètre dans le cas d'un fil) est par exemple comprise entre 0,1 mm et 2 mm. Le fil ou ruban 30a, 30b est enroulé autour d'une paire de feuilles support isolantes 31a, 31b.

Le choix d'un ruban résistif peut présenter plusieurs avantages par rapport à un fil résistif : il offre une plus grande surface de dissipation, il est plus facile à conformer lors de son enroulement, et sa résistivité peut être plus facilement réglée en adaptant sa longueur et/ou sa largeur. La largeur du ruban résistif peut varier de 2 mm à 10 mm par exemple.

Chaque feuille 31a, 31b a une forme, en plan, rectangulaire ayant deux bords longitudinaux 312 - ou grands côtés - et deux bords latéraux et - ou petits côtés - respectivement 310a-311a et 310b, 311b. Leur longueur est par exemple comprise entre 220 mm et 740 mm, dont la largeur est par exemple comprise entre 90 mm et 340 mm et dont l'épaisseur est par exemple comprise entre 0,5 mm et 5 mm. De préférence, les feuilles 31a, 31b sont en mica pour ses propriétés d'isolation électrique, de résistance à la chaleur et de flexibilité.

Pour assurer le maintien et le guidage des enroulements des fils ou rubans 30a, 30b le long des faces avant et arrière des feuilles 31a, 31b, des profils dentés à encoches 310 sont ménagés dans les bords longitudinaux 312. La profondeur des encoches 310 est supérieure à l'épaisseur (ou diamètre dans le cas d'un fil) du fil ou ruban 30a, 30b, de sorte que ce dernier ne fait pas saillie des bords longitudinaux 312 en restant en retrait de ceux-ci. Une fente peut être ménagée dans une ou plusieurs encoches 310, sensiblement au milieu de celles-ci. Dans cette fente s'engage totalement le fil ou ruban 30a, 30b, de sorte qu'il est, à ce niveau, maintenu en position, facilitant le changement de sens des enroulements dudit fil ou ruban d'une face à l'autre des feuilles 31a, 31b.

Selon l'invention un fil ou ruban 30a, 30b est enroulé sur toute la longueur de chaque feuille 31a, 31b en partant d'un bord latéral 310a, 310b, jusqu'au bord latéral opposé 311a, 311b. On enroule de manière indépendante et identique un fil ou ruban 30a, 30b sur chacune des feuilles 31a, 31b. Ces dernières sont ensuite disposées côte-à-côte, dans un même plan, et en miroir, de sorte que les extrémités respectives des fils ou rubans 30a, 30b soient adjacentes ou quasiment adjacentes. Un connecteur plat 32 en métal, se présentant par exemple sous forme de lamelle ou d'une portion de ruban, est soudé au niveau d'une des paires d'extrémités, celles situées au niveau des bords latéraux gauche 311a, 311b sur la figure 3. Ce connecteur plat 32 permet d'établir, de manière simple une connexion électrique entre les feuilles 31a, 31b sur chacune desquelles est enroulé le fil ou ruban 30a, 30b respectif. Les autres extrémités situées au niveau des bords latéraux droits 310a, 310b sont liées à des connecteurs respectifs 32a, 32b. La connexion électrique entre ces extrémités et les connecteurs 32a, 32b est réalisée au moyen de connecteurs plats 32. Ces connecteurs 32 sont plus larges que l'épaisseur (ou diamètre dans le cas d'un fil) des fils ou rubans 30a, 30b de sorte qu'ils assurent une bonne conduction électrique, sans chauffer, ou en chauffant peu.

Ce montage à deux feuilles 31a, 31b permet d'obtenir très simplement un élément résistif où les connecteurs 32a, 32b sont proches, pratiquement adjacents, et situés d'un même côté, au niveau des bords latéraux droits 310a, 310b sur la figure 3. Dans cette configuration, le raccordement des connecteurs 32 au boîtier électronique de gestion 12, et notamment leur cheminement jusqu'à celui-ci, est grandement facilité. En outre, avant de connecter ensemble les deux feuilles 31a, 31b, chacune de celles-ci-peut être stockée avec un encombrement réduit.

Bien évidemment, si la solution représentée sur la figure 3 est particulièrement avantageuse, d'autres techniques peuvent être utilisées. En particulier, on peut prévoir qu'un seul fil ou ruban résistif est enroulé successivement autour des deux feuilles 31a, 31b.

Comme mentionné précédemment, les connecteurs 32a, 32b se raccordent au boîtier électronique de gestion 12 lui-même connecté au câble d'alimentation électrique branché dans une prise d'alimentation. L'élément résistif chauffant 3 est préférentiellement alimenté en 24 Volts ou 230 Volts. Sa puissance de chauffe est par exemple comprise entre 50 W et 3000 W.

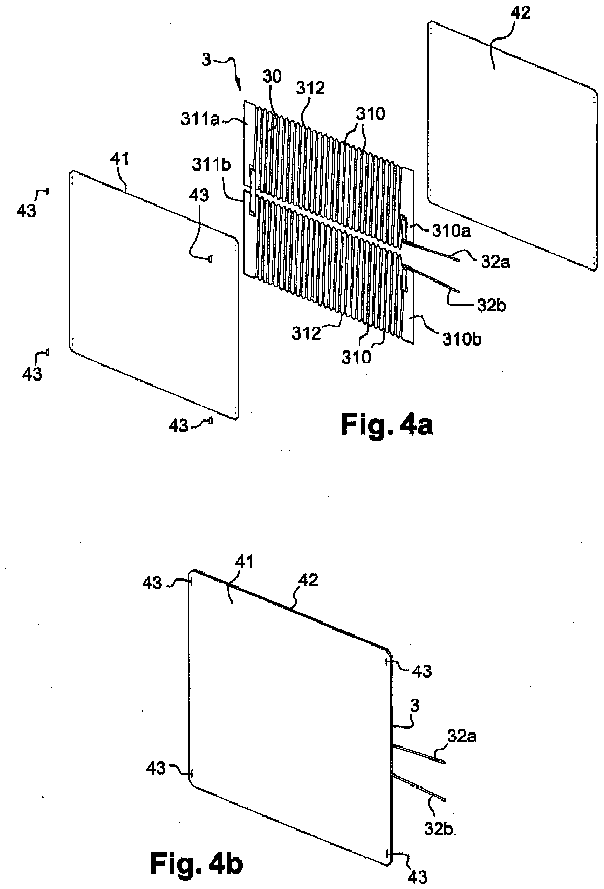

Pour réaliser une première isolation électrique, et comme illustré sur la figure 4a et 4b, l'élément résistif chauffant 3 est recouvert, sur ses deux faces, par les deux premières feuilles isolantes 41, 42 qui sont également réalisées en mica pour les raisons évoquées préalablement. L'épaisseur des feuilles de support 31a, 31b est la même, ou sensiblement la même, que celle des premières feuilles 41, 42.

L'épaisseur des feuilles isolantes 41, 42 est similaire à celle des feuilles support 31a, 31b. Leurs dimensions en longueur et en largeur sont au moins égales à celles de l'élément résistif chauffant 3. Ainsi, ce dernier est pris en sandwich par les premières feuilles 41, 42, les bords périphériques 312, 310a, 310b, 311a, 311b de l'élément résistif chauffant 3 venant au moins à fleur des bords périphériques respectifs des feuilles 41, 42, en réalisant la première isolation électrique. De plus, l'agencement des enroulements du fil ou ruban 30 au fond des encoches 310 participe à isoler encore plus le fil ou ruban 30 des bords périphériques ou tranches des feuilles 41, 42 puisqu'il se trouve éloigné de ceux-ci et, donc, à renforcer avantageusement la première isolation électrique du module chauffant 2. La configuration des encoches 310 définisse donc le retrait du fil ou ruban 30a, 30b, par rapport aux bords longitudinaux 312 des feuilles 31a, 31b. La profondeur et/ou le profil des encoches 310 peuvent permettre de respecter les exigences des normes en vigueur concernant la distance dans l'air et/ou la longueur des lignes de fuite. Ainsi, lorsque l'élément résistif chauffant 3 et les premières feuilles 41, 42 sont assemblés, le fil ou ruban résistif 30 se trouve en retrait des bords périphériques desdites premières feuilles, garantissant l'isolation électrique souhaitée (ex : isolation électrique de classe 1). La fixation des feuilles isolantes 41, 42 sur l'élément résistif chauffant 3 peut, dans ce cas, être réalisée par collage.

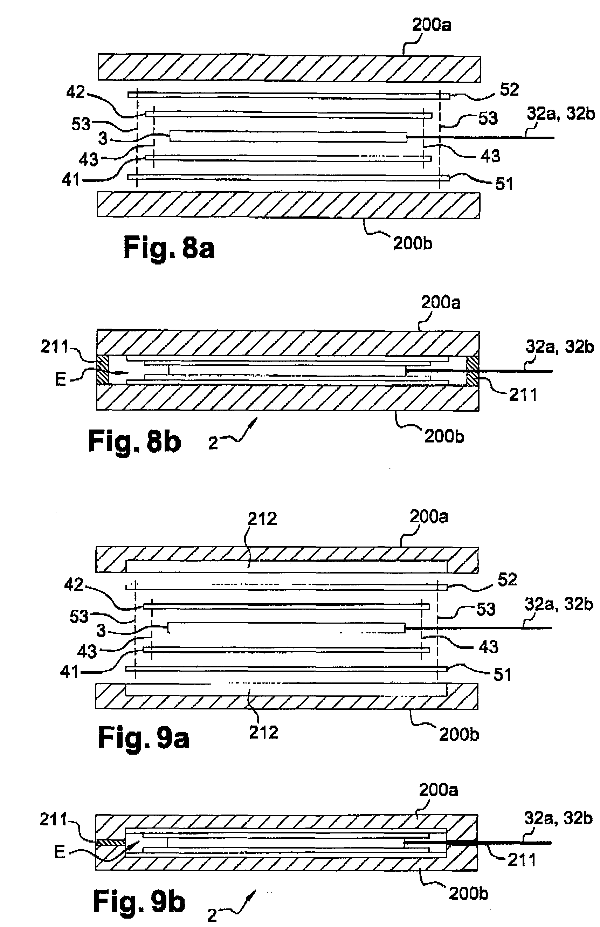

Toutefois, pour éviter une solution par collage, dont la tenue risque d'être dégradée par le temps et/ou les contraintes de chaleur, l'élément résistif chauffant 3 peut être installé librement dans l'espace délimité par les premières feuilles isolantes 41, 42. Dans ce cas, les dimensions en longueur et en largeur des feuilles isolantes 41, 42 sont supérieures à celles de l'élément résistif chauffant 3. Les feuilles isolantes 41, 42 peuvent par exemple être plus longues et plus larges de 1 mm à 20 mm. Ainsi, les bords périphériques de l'élément résistif chauffant 3 se trouvent en retrait des bords périphériques des premières feuilles 41, 42. En d'autres termes, les bords périphériques des premières feuilles 41, 42 font saillie extérieurement des bords périphériques de l'élément résistif chauffant 3. Cette configuration est notamment illustrée sur les figures 8a, 8b, 9a et 9b. Le fil ou ruban résistif 30 se trouve ici encore en retrait des bords périphériques desdites premières feuilles, même si celui-ci n'est pas installé dans les encoches 310, garantissant l'isolation électrique souhaitée. Les connecteurs 32a, 32b font quant à eux saillie hors de cet empilement.

L'élément résistif chauffant 3 est en outre avantageusement centré par rapport aux premières feuilles 41, 42 pour obtenir un retrait ou écart identique par rapport aux bords périphériques respectifs desdites premières feuilles. Cet écart ou retrait est de l'ordre de 1 mm à 20 mm.

Sur les figures 4a, 8a, 8b, 9a et 9b, les premières feuilles isolantes 41, 42 sont assemblées entre elles au moyen d'organes d'assemblage 43. Ces derniers sont par exemple disposés au voisinage des coins des premières feuilles isolantes 41, 42. Plus généralement, les organes d'assemblage 43 sont disposés au niveau des bords périphériques des premières feuilles 41, 42 faisant saillie extérieurement des bords périphériques de l'élément résistif chauffant 3, de sorte que lesdits organes d'assemblage ne soient pas en contact avec ledit élément résistif chauffant, et plus particulièrement avec le fil ou ruban 30, garantissant de ce fait l'isolation électrique souhaitée. Les organes d'assemblage 43 peuvent ainsi être réalisés dans un matériau conducteur et se présenter avantageusement sous forme d'agrafes métalliques. Ces agrafes sont particulièrement faciles à installer et très peu coûteuses. En outre, elles procurent une fixation fiable des feuilles 41, 42 et surtout une faible épaisseur, ce qui limite au mieux, par voie de conséquence, l'épaisseur finale du module chauffant 2.

Un montage aisé est réalisé en agrafant trois des quatre bords des premières feuilles 41, 42. On forme ainsi une sorte de poche, pochette ou chemise à l'intérieur de laquelle est inséré l'élément résistif chauffant 3. Lorsque ce dernier est installé, on agrafe le quatrième bord pour fermer l'ensemble et maintenir l'élément résistif chauffant 3 en position, emprisonné et serré entre les deux premières feuilles 41, 42.

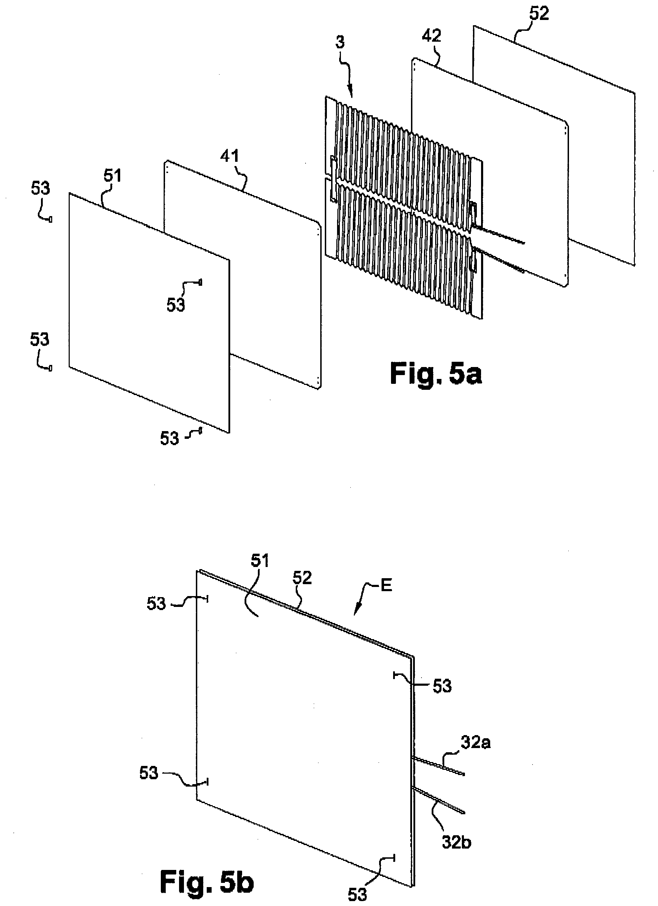

Certaines normes en vigueur peuvent imposer de prévoir une double isolation électrique du module chauffant 2 (ex : isolation électrique de classe 2). En se rapportant aux figures 5a et 5b, pour réaliser cette seconde isolation électrique tout en limitant l'épaisseur de l'assemblage, deux secondes feuilles isolantes 51, 52, également en mica, recouvrent à leur tour les premières feuilles 41, 42, prenant ainsi en sandwich l'élément résistif chauffant 3 isolé électriquement par lesdites premières feuilles.

L'épaisseur des secondes feuilles 51, 52 est de préférence la même que celle des premières feuilles 41, 42 pour conserver un empilement d'épaisseur réduite. En revanche, les dimensions de ces secondes feuilles 51, 52, en longueur et en largeur, peuvent être supérieures à celles des premières feuilles 41, 42, comme le montrent les figures 8a, 8b, 9a et 9b. Les secondes feuilles isolantes 51, 52 peuvent par exemple être plus longues et plus larges de 1 mm à 20 mm.

Si le fil ou ruban 30 est suffisamment en retrait des bords périphériques ou tranches des premières feuilles 41, 42 pour obtenir l'isolation électrique souhaitée (ex : l'isolation électrique de classe 2), alors les dimensions des secondes feuilles 51, 52, en longueur et en largeur, peuvent être égales à celles desdites premières feuilles 41, 42.

L'ensemble des premières feuilles 41, 42 et de l'élément résistif chauffant 3, est en outre centré par rapport aux secondes feuilles 51, 52 pour obtenir un retrait ou écart identique par rapport aux bords périphérique respectifs desdites secondes feuilles. Cet écart ou retrait est de l'ordre de 1 mm à 20 mm. Les connecteurs 32a, 32b font saillie hors de cet empilement. Cet empilement E de feuilles superposées (figure 5b), présente ainsi une double isolation électrique tout en étant de faible épaisseur.

Les secondes feuilles 51, 52 peuvent être assemblées entre elles au moyen d'organes d'assemblage 53 du type décrit précédemment, des agrafes métalliques étant privilégiées pour les raisons évoquées ci-dessus. Ces dernières sont par exemple disposées au voisinage des coins des secondes feuilles 51, 52. Plus généralement, les organes d'assemblage 53 sont disposés au niveau des bords périphériques des secondes feuilles 51, 52 faisant saillie extérieurement des bords périphériques de l'élément résistif chauffant 3, de sorte que lesdits organes d'assemblage ne soient pas en contact avec lesdites premières feuilles, garantissant de ce fait la seconde isolation électrique souhaitée.

Un montage aisé peut là encore être réalisé en agrafant trois des quatre bords des secondes feuilles 51, 52 pour former une sorte de poche, pochette ou chemise à l'intérieur de laquelle est inséré l'élément résistif chauffant 3 isolé par les premières feuilles 41, 42. On agrafe ensuite le quatrième bord pour fermer l'ensemble E.

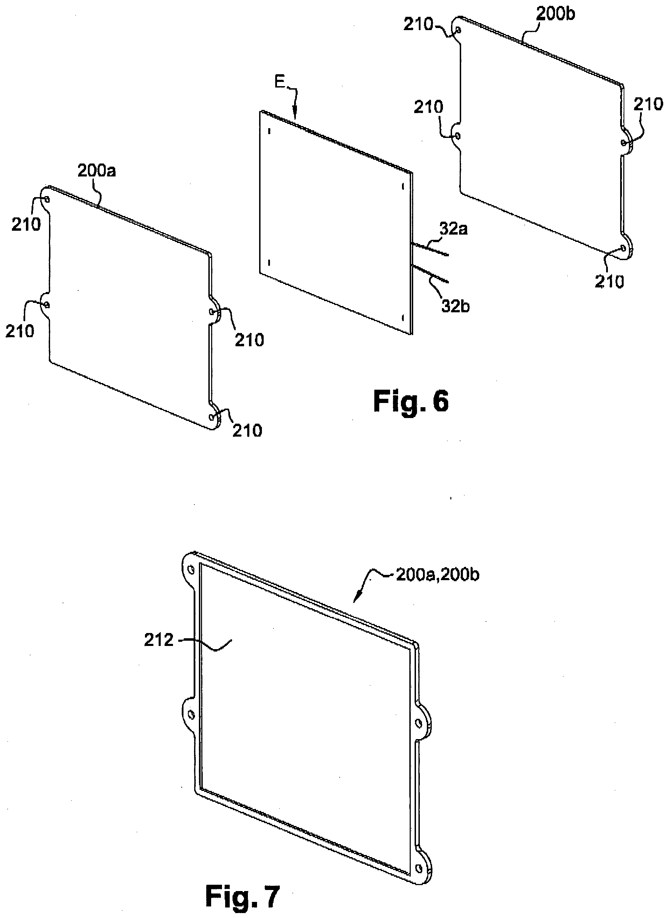

Sur la figure 6, les deux plaques 200a, 200b sont disposées respectivement de part et d'autre de l'élément résistif chauffant 3 isolé électriquement (simplement ou doublement). Elles prennent ainsi en sandwich l'empilement E précité, ce dernier couvrant la majeure partie des plaques 200a, 200b (figure 2).

On précise, si besoin en était, que dans le cas d'une isolation simple, l'empilement E est formé de l'élément résistif chauffant 3 pris en sandwich entre les premières feuilles 41, 42. Et que dans le cas d'une isolation double, cet empilement E est formé de l'élément résistif chauffant 3 pris en sandwich entre les premières feuilles 41, 42, elles même prises en sandwich par les secondes feuilles 51, 52. On entend également par « *élément résistif chauffant isolé électriquement »,* l'élément résistif chauffant 3 recouvert des premières feuilles 41, 42 et/ou des secondes feuilles 51, 52.

La longueur des plaques 200a, 200b est par exemple comprise entre 150 mm et 750 mm, et leur largeur par exemple comprise entre 50 mm et 350 mm. Leur épaisseur est par exemple comprise entre 2 mm et 20 mm. Les dimensions des plaques 200a, 200b, en longueur et en largeur, sont égales ou supérieures à celles des secondes feuilles 51, 52, comme le montrent les figures 8a, 8b, 9a et 9b. Les plaques 200a, 200b peuvent par exemple être plus longues et plus larges de 4 mm à 40 mm.

L'empilement E est en outre préférentiellement centré par rapport aux plaques 200a, 200b pour obtenir un retrait ou écart identique par rapport aux bords périphérique respectifs desdites plaques. Cet écart ou retrait est de l'ordre de 0 mm à 20 mm. Les connecteurs 32a, 32b font encore saillie hors du module chauffant 2.

Les plaques 200a, 200b sont assemblées entre elles par vissage ou boulonnage par exemple. Sur les figures 2 et 6, des réservations 210 sont prévues au niveau des bordures des plaques 200a, 200b pour le passage des vis ou des boulons. Comme on le voit, ces réservations 210 font saillie extérieurement des bords périphériques des plaques 200a, 200b, ce qui est susceptible d'augmenter l'encombrement du module de chauffage 2. Aussi, dans le mode de réalisation des figures 8b et 9b, les deux plaques 200a, 200b sont assemblées entre elles au moyen d'un adhésif 211 disposé sur la bordure interne desdites plaques. Cet adhésif peut par exemple se présenter sous la forme d'un joint souple en silicone, disposé de manière continue ou discontinue le long des bords périphériques internes des plaques 200a, 200b. Outre l'assemblage des plaques 200a, 200b, cet adhésif 211 permet d'isoler l'empilement E et de le protéger des poussières et des fluides (eau, condensation, vapeur d'eau, ...). On notera que dans cette configuration, les réservations 210 peuvent être conservées, pour solidariser, par vissage ou boulonnage par exemple, le module de chauffage 2 au châssis 11.

L'élément résistif chauffant 3 isolé électriquement, ainsi installé dans le corps de dissipation thermique formé par l'assemblage de deux plaques 200a, 200b, peut alors transmettre audit corps la chaleur qu'il fournit. La demanderesse a pu constater que le transfert thermique entre l'élément résistif chauffant 3 et les plaques 200a, 200b était au moins aussi bon que celui observé dans un module chauffant du type décrit dans le document brevet EP1067822 (MULLER). Ce bon transfert thermique est principalement dû au fait que l'empilement E est pris en sandwich et donc comprimé entre les plaques 200a, 200b, assurant un contact optimal avec les faces internes desdites plaques 200a, 200b.

Sur les figures 8b et 9b, il est à noter que l'empilement E occupe, une fois pris en sandwich par les plaques 200a, 200b, quasiment tout l'espace interne délimité par lesdites plaques. La chaleur engendrée par l'élément résistif chauffant 3 est diffusé sur toute la surface des plaques 200a, 200b. Le module de chauffage 2 a par conséquent une température de chauffe homogène.

Un exemple de réalisation d'un module de chauffage 2 est donné ci-après :
- fil ou ruban résistif métallique chauffant, enroulé autour de la feuille de support en mica : épaisseur 0,5 mm,
- deux premières feuilles de mica : épaisseur 2 × 1 mm,
- deux secondes feuilles de mica : épaisseur 2 × 1 mm,
- agrafes métalliques : épaisseur 1 mm,
- deux plaques en fonte : épaisseur 2x5 mm.

L'épaisseur totale d'un module de chauffage à simple isolation est de 13,5 mm. L'épaisseur totale d'un module de chauffage à double isolation est de 15,5 mm. Ce module de chauffage 2 peut donc être installé sans difficulté à l'intérieur d'un appareil de chauffage ayant un espace inter-parois d'environ 50 mm.

Les figures 7, 9a et 9b illustrent un mode de réalisation permettant de réduire encore davantage l'épaisseur totale du module de chauffage 2. Pour cela, un évidement 212 est réalisé dans la paroi interne de chacune des plaques 200a, 200b. Ces évidements 212 se juxtaposent après assemblage des plaques 200a, 200b pour former un aménagement dans lequel se loge l'élément résistif chauffant 3 isolé électriquement ou, en d'autres termes l'empilement E. L'épaisseur de l'empilement E est ainsi contenue au moins en partie dans l'épaisseur des plaques 200a, 200b, diminuant de fait l'épaisseur totale du module de chauffage 2, cette épaisseur totale correspondant pratiquement à la seule épaisseur combinée desdites plaques.

Ces évidements 212 peuvent être directement obtenus lors du moulage des plaques 200a, 200b, ou par usinage, après moulage. Ils sont centrés par rapport aux bords périphériques des plaques 200a, 200b. Leurs contours correspondent à ceux de l'élément résistif chauffant 3 isolé électriquement.

Les dimensions des évidements 212, en longueur et en largeur, sont égales ou supérieures à celles de l'empilement E, en particulier à celles des premières feuilles 41, 42 dans le cas d'une isolation simple, ou à celles des secondes feuilles 51, 52 dans le cas d'une isolation double. Les évidements 212 peuvent par exemple être plus longs et plus larges de 1 mm à 5 mm. Ces dimensions légèrement supérieures facilitent l'installation de l'empilement E, tout en assurant un bon positionnement de ce dernier. La profondeur des évidements 212 est au plus égale, préférentiellement inférieure, à la moitié de l'épaisseur de l'empilement E de façon à conserver une bonne compression de l'empilement E après assemblage des plaques 200a, 200b.

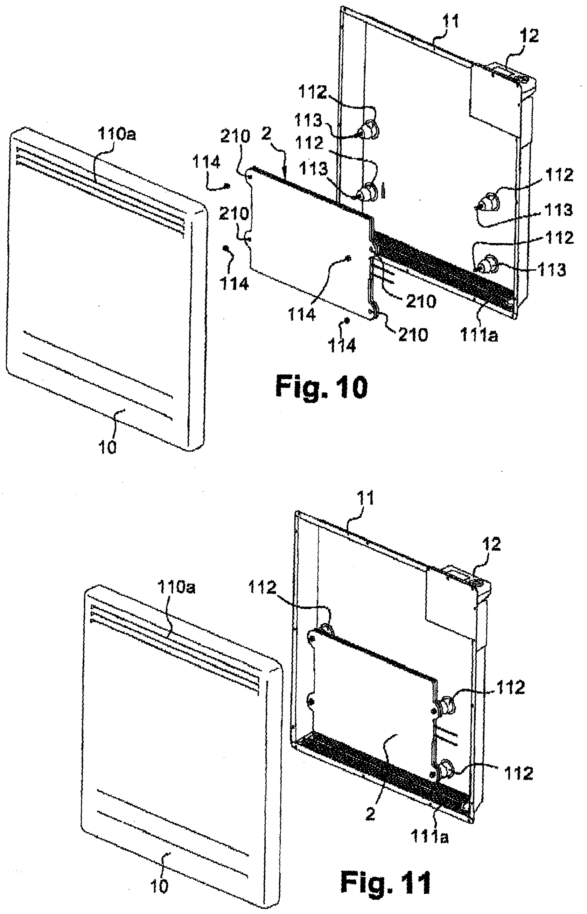

Les figures 10 et 11 illustrent la fixation du module chauffant 2 à l'intérieur d'un radiateur électrique. Le module chauffant 2 est maintenu à distance de la face interne du châssis arrière 11 par des plots 112 réalisés dans un matériau isolant électrique tel que la céramique. Ces plots 112 présentent des tiges filetées 113 qui font saillie perpendiculairement à la face interne du châssis arrière 11. Lorsque le module chauffant 2 est présenté devant les plots 112, les tiges 113 traversent les plaques 200a, 200b au niveau des réservations 210. Des écrous 114 viennent se visser au niveau des extrémités des tiges 113 qui dépassent des plaques 200a, 200b, leur vissage venant plaquer le module chauffant 2 contre les plots 112.

L'agencement des différents éléments et/ou moyens et/ou étapes de l'invention, dans les modes de réalisation décrits ci-dessus, ne doit pas être compris comme exigeant un tel agencement dans toutes les implémentations. En particulier :
- Le module chauffant 2 n'est pas nécessairement de forme générale parallélépipédique, mais peut avoir un ou plusieurs rebords courbes ou en ligne brisée, une forme ovale circulaire, etc.
- La première isolation électrique de l'élément résistif chauffant 3 peut être réalisée en recouvrant le fil ou ruban résistif d'une gaine isolante réalisée dans un matériau du type caoutchouc ou silicone par exemple.
- Les organes d'assemblage 43, 53 peuvent se présenter sous la forme de rivets métalliques ou plastiques, sous la forme d'un adhésif (par exemple un joint ou des points de silicone) disposé sur la bordure interne des feuilles 41 et/ou 42, respectivement 51 et/ou 52, etc.
- Le mica peut être remplacé par un autre matériau isolant souple, tel que le polyester, silicone, etc.
- Les secondes feuilles 51, 52 peuvent être solidarisées aux premières feuilles 41, 42 au moyen d'un adhésif, du type colle par exemple.
- Les agrafes métalliques 43 peuvent perforées simultanément les premières feuilles 41, 42 et les feuilles support 31a, 31b, à condition qu'elles soient suffisamment éloignées du fil ou ruban résistif 30 pour garantir l'isolation électrique souhaitée.
- Les agrafes métalliques 53 peuvent perforées simultanément les secondes feuilles 51, 52, les premières feuilles 41, 42 et les feuilles support 31a, 31b à condition qu'elles soient suffisamment éloignées du fil ou ruban résistif 30 pour garantir l'isolation électrique souhaitée.

## Revendications

1. Procédé de fabrication d'un module chauffant pour appareil de chauffage électrique, comprenant les étapes consistant à :
- réaliser un corps en fonte formant dissipateur thermique,
- installer dans le corps, un élément résistif chauffant (3) isolé électriquement de sorte que la chaleur fournie par ledit élément résistif chauffant soit transmise audit corps,
- former le corps en assemblant les deux plaques en fonte (200a, 200b), lesdites plaques étant assemblées de manière à prendre en sandwich l'élément résistif chauffant (3) isolé électriquement,
**caractérisé par le fait qu'**il comprend en outre les étapes consistant à :
- mouler les deux plaques en fonte (200a, 200b),
- assembler les deux plaques en fonte (200a, 200b)de manière à comprimer l'élément résistif chauffant (3) isolé électriquement,
- enrouler un fil ou un ruban résistif (30a) sur toute la longueur d'une première feuille support isolante (31a) en partant d'un bord latéral (310a) de ladite feuille, jusqu'au bord latéral opposé (311a) de ladite feuille,
- enrouler un fil ou un ruban résistif (30b) sur toute la longueur d'une seconde feuille support isolante (31b) en partant d'un bord latéral (310b) de ladite feuille, jusqu'au bord latéral opposé (311b) de ladite feuille,
- disposer les deux feuilles (31a, 31b) côte-à-côte, dans un même plan, et en miroir, de sorte que les extrémités respectives des fils ou rubans (30a, 30b) soient adjacentes ou quasiment adjacentes,
- souder un connecteur plat (32) en métal au niveau d'une des paires d'extrémités des fils ou rubans (30a, 30b) situées au niveau des bords latéraux situés d'un même côté des feuilles (31a, 31b), pour établir une connexion électrique entre lesdites feuilles,
- lier à des connecteurs respectifs (32a, 32b) les autres extrémités respectives des fils ou rubans (30a, 30b) situées au niveau des bords latéraux situés de l'autre côté des feuilles (31a, 31b).

2. Procédé selon la revendication 1, comportant les étapes suivantes :
- former l'isolation électrique de l'élément résistif chauffant (3) par deux premières feuilles isolantes (41, 42) respectivement disposées de part et d'autre dudit élément résistif chauffant de manière à prendre en sandwich celui-ci, les dimensions en longueur et en largeur desdites premières feuilles isolantes (41, 42) sont supérieures à celles dudit élément résistif chauffant de sorte que les bords périphériques dudit élément résistif chauffant se trouvent en retrait des bords périphériques desdites premières feuilles,
- assembler les premières feuilles isolantes (41, 42) entre elles au moyen d'organes d'assemblage (43),
- disposer les organes d'assemblage (43) au niveau des bords périphériques des premières feuilles (41, 42) faisant saillie extérieurement des bords périphériques de l'élément résistif chauffant (3), de sorte que lesdits organes d'assemblage ne soient pas en contact avec ledit élément résistif chauffant,
- utiliser des agrafes métalliques comme les organes d'assemblage (43) des feuilles isolantes (41, 42), lesquelles agrafes perforent simultanément les premières feuilles isolantes (41, 42) et les feuilles support isolantes (31a, 31b).

3. Procédé selon l'une des revendications précédentes, comportant les étapes suivantes :
- utiliser, en tant que seconde isolation électrique, deux secondes feuilles isolantes (51, 52) disposées respectivement de part et d'autre de l'élément résistif chauffant (3) isolé électriquement de manière à prendre en sandwich celui-ci, les dimensions en longueur et en largeur desdites secondes feuilles isolantes (51, 52) sont supérieures ou égales à celles dudit élément résistif chauffant (3) isolé électriquement de sorte que les bords périphériques dudit élément résistif chauffant isolé électriquement se trouvent en retrait des bords périphériques desdites secondes feuilles,
- assembler les secondes feuilles isolantes (13, 14) entre elles au moyen d'organes d'assemblage (53),
- disposer les organes d'assemblage (53) au niveau des bords périphériques des secondes feuilles (51, 52) faisant saillie extérieurement des bords périphériques de l'élément résistif chauffant (3) isolé électriquement, de sorte que lesdits organes d'assemblage ne soient pas en contact avec ledit élément résistif chauffant isolé électriquement,
- utiliser des agrafes métalliques comme les organes d'assemblage (43) des secondes feuilles isolantes (51, 52).

4. Procédé selon la revendication 3 prise en combinaison avec la revendication 2, dans lequel les agrafes métalliques (53) perforent simultanément les secondes feuilles isolantes (51, 52), les premières feuilles isolantes (41, 42) et les feuilles support isolantes (31a, 31b).

5. Procédé selon la revendication 4, comprenant une étape consistant à solidarisé les secondes feuilles isolantes (51, 52) aux premières feuilles isolantes (41, 42) au moyen d'un adhésif.

6. Procédé selon l'une des revendications précédentes, comprenant une étape consistant à réaliser un évidement (212) dans la paroi interne de chacune des plaques en fonte (200a, 200b), lesquels évidements se juxtaposent, après assemblage desdites plaques, pour former un aménagement dans lequel se loge l'élément résistif chauffant (3) isolé électriquement.

7. Procédé selon la revendication 6, dans lequel la profondeur des évidements (212) est au plus égale, préférentiellement inférieure, à la moitié de l'épaisseur de l'élément résistif chauffant (3) isolé électriquement.

8. Procédé selon l'une des revendications précédentes, comprenant une étape consistant à assembler entre elles les deux plaques en fonte (200a, 200b) au moyen d'un adhésif (211) disposé sur la bordure interne desdites plaques.

9. Procédé selon la revendication 8, dans lequel l'adhésif est un joint souple en silicone, disposé de manière continue ou discontinue le long des bords périphériques internes des plaques en fonte (200a, 200b).

10. Procédé selon la revendication 2, consistant à agrafer trois des quatre bords des premières feuilles isolantes (41, 42) de manière à former une poche, pochette ou chemise à l'intérieur de laquelle est inséré l'élément résistif chauffant (3), puis à agrafer le quatrième bord desdites premières feuilles isolantes (41, 42) pour fermer l'ensemble et maintenir l'élément résistif chauffant (3) en position, emprisonné et serré entre lesdites premières feuilles isolantes.

11. Procédé selon les revendications 2 et 3, consistant à agrafer trois des quatre bords des secondes feuilles isolantes (51, 52) de manière à former une poche, pochette ou chemise à l'intérieur de laquelle est inséré l'élément résistif chauffant (3) isolé par les premières feuilles isolantes (41, 42), puis à agrafer le quatrième bord desdites secondes feuilles isolantes pour fermer l'ensemble.

## Patentansprüche

1. Verfahren zum Herstellen eines Heizmoduls für eine elektrische Heizvorrichtung, das die folgenden Schritte umfasst:
- Herstellen eines gusseisernen Körpers, der einen Wärmeableiter bildet,
- Installieren eines elektrisch isolierten Widerstandsheizelements (3) in dem Körper, sodass die von dem Widerstandsheizelement gelieferte Wärme auf den Körper übertragen wird,
- Bilden des Körpers durch Zusammenbauen der zwei gusseisernen Platten (200a, 200b), wobei die Platten so zusammengebaut werden, dass sie das elektrisch isolierte Widerstandsheizelement (3) sandwichartig aufnehmen,
**dadurch gekennzeichnet, dass** es ferner die folgenden Schritte umfasst:
- Formen der zwei gusseisernen Platten (200a, 200b),
- Zusammenbauen der zwei gusseisernen Platten (200a, 200b), sodass das elektrisch isolierte Widerstandsheizelement (3) zusammengedrückt wird;
- Aufwickeln eines Widerstandsdrahts oder -bands (30a) über die gesamte Länge einer ersten Isolierträgerplatte (31a) von einer Seitenkante (310a) der Platte bis zur gegenüberliegenden Seitenkante (311a) der Platte,
- Aufwickeln eines Widerstandsdrahts oder -bands (30b) über die gesamte Länge einer zweiten Isolierträgerplatte (31b) von einer Seitenkante (310b) der Platte bis zur gegenüberliegenden Seitenkante (311b) der Platte,
- Anordnen der zwei Platten (31a, 31b) nebeneinander, in der gleichen Ebene und auf gespiegelte Weise, sodass die jeweiligen Enden der Drähte oder Bänder (30a, 30b) benachbart oder fast benachbart sind,
- Verschweißen eines flachen Metallverbindungsstücks (32) auf Höhe eines der Paare von Enden der Drähte oder Bänder (30a, 30b), die sich an den Seitenkanten auf derselben Seite der Platte (31a, 31b) befinden, um eine elektrische Verbindung zwischen den Platten herzustellen;
- Verbinden der anderen jeweiligen Enden der Drähte oder Bänder (30a, 30b), die sich an den Seitenkanten auf der anderen Seite der Platte (31a, 31b) befinden, mit den jeweiligen Verbindungsstücken (32a, 32b).

2. Verfahren nach Anspruch 1, das die folgenden Schritte umfasst:
- Bilden der elektrischen Isolierung des Widerstandsheizelements (3) durch zwei erste Isolierplatten (41, 42), die jeweils auf beiden Seiten des Widerstandsheizelements so angeordnet sind, dass es sandwichartig zwischen ihnen aufgenommen ist, wobei die Längen- und Breitenabmessungen der ersten Isolierplatten (41, 42) größer sind als die des Widerstandsheizelements, sodass die Umfangskanten des Widerstandsheizelements von den Umfangskanten der ersten Platten zurückgesetzt sind,
- Zusammenfügen der ersten Isolierplatten (41, 42) mittels von Montageelementen (43),
- Anordnen der Montageelemente (43) auf Höhe der Umfangskanten der ersten Platten (41, 42), die von den Umfangskanten des Widerstandsheizelements (3) nach außen vorstehen, sodass die Montageelemente nicht mit dem Widerstandsheizelement in Kontakt sind,
- Verwenden von Metallklammern als die Montageelemente (43) der Isolierplatten (41, 42), wobei die Klammern gleichzeitig die ersten Isolierplatten (41, 42) und die Isolierträgerplatten (31a, 31b) perforieren.

3. Verfahren nach einem der vorhergehenden Ansprüche, das die folgenden Schritte umfasst:
- Verwenden zweier zweiter Isolierplatten (51, 52) als zweite elektrische Isolierung, die jeweils auf beiden Seiten des elektrisch isolierten Widerstandsheizelements (3) so angeordnet sind, dass sie sandwichartig aufgenommen sind, wobei die Längen- und Breitenabmessungen der zweiten Isolierplatten (51, 52) größer oder gleich denen des elektrisch isolierten Widerstandsheizelements (3) sind, sodass die Umfangskanten des elektrisch isolierten Widerstandsheizelements von den Umfangskanten der zweiten Platten zurückgesetzt sind,
- Zusammenfügen der zweiten Isolierplatten (13, 14) mittels Montageelementen (53),
- Anordnen der Montageelemente (53) auf Höhe der Umfangskanten der zweiten Platten (51, 52), die von den Umfangskanten des elektrisch isolierten Widerstandsheizelements (3) nach außen vorstehen, sodass die Montageelemente nicht mit dem elektrisch isolierten Widerstandsheizelement in Kontakt sind,
- Verwenden von Metallklammern als die Montageelemente (43) der zweiten Isolierplatten (51,52).

4. Verfahren nach Anspruch 3 in Kombination mit Anspruch 2, wobei die Metallklammern (53) gleichzeitig die zweiten Isolierplatten (51, 52), die ersten Isolierplatten (41, 42) und die Isolierträgerplatten (31a, 31b) perforieren.

5. Verfahren nach Anspruch 4, das einen Schritt umfasst, der darin besteht, die zweiten Isolierplatten (51, 52) an den ersten Isolierplatten (41, 42) mittels eines Klebstoffs zu befestigen.

6. Verfahren nach einem der vorhergehenden Ansprüche, das einen Schritt umfasst, der darin besteht, eine Aussparung (212) in der Innenwand jeder der gusseisernen Platten (200a, 200b) herzustellen, wobei die Aussparungen nach der Montage der Platten nebeneinander angeordnet sind, um eine Anordnung zu bilden, in der das elektrisch isolierte Widerstandsheizelement (3) untergebracht ist.

7. Verfahren nach Anspruch 6, wobei die Tiefe der Aussparungen (212) höchstens gleich, vorzugsweise kleiner als die Hälfte der Dicke des elektrisch isolierten Widerstandsheizelements (3) ist.

8. Verfahren nach einem der vorhergehenden Ansprüche, das einen Schritt umfasst, der darin besteht, die zwei gusseisernen Platten (200a, 200b) mittels eines Klebstoffs (211) zusammenzufügen, der an der Innenkante dieser Platten angeordnet ist.

9. Verfahren nach Anspruch 8, wobei der Klebstoff eine flexible Silikondichtung ist, die kontinuierlich oder diskontinuierlich entlang den inneren Umfangskanten der gusseisernen Platten (200a, 200b) angeordnet ist.

10. Verfahren nach Anspruch 2, das darin besteht, drei der vier Kanten der ersten Isolierplatten (41, 42) zu klammern, um eine Tasche, einen Beutel oder eine Hülle zu bilden, in die das Widerstandsheizelement (3) eingesetzt wird, dann die vierte Kante der ersten Isolierplatten (41, 42) zu klammern, um das Ganze zu schließen und das Widerstandsheizelement (3) eingeschlossen und zwischen den ersten Isolierplatten eingeklemmt zu halten.

11. Verfahren nach den Ansprüchen 2 und 3, das darin besteht, drei der vier Kanten der zweiten Isolierplatten (51, 52) zu klammern, um eine Tasche, einen Beutel oder eine Hülle zu bilden, in die das durch die ersten Isolierplatten (41, 42) isolierte Widerstandsheizelement (3) eingesetzt wird, dann die vierte Kante der zweiten Isolierplatten zu klammern, um das Ganze zu schließen.

## Claims

1. A method of producing a heating module for an electric heater, comprising the steps of:
- creating a cast iron heat sink body,
- installing in the body an electrically insulated resistive heating element (3) so that the heat supplied by said resistive heating element is transmitted to said body,
- forming the body by joining together the two cast iron plates (200a, 200b), said plates being joined so as to sandwich the electrically insulated resistive heating element (3),
**characterised in that** it further comprises the steps of:
- moulding two cast iron plates (200a, 200b),
- joining together the two cast iron plates (200a, 200b) so as to compress the electrically insulated resistive heating element (3),
- winding a resistive wire or tape (30a) along the length of a first insulating support sheet (31a) starting from one side edge (310a) of said sheet to the opposite side edge (311a) of said sheet,
- winding a resistive wire or tape (30b) along the entire length of a second insulating support sheet (31b) starting from one side edge (310b) of said sheet to the opposite side edge (311b) of said sheet,
- arrange the two sheets (31a, 31b) side by side, in the same plane, and in mirror image, so that the respective ends of the wires or tapes (30a, 30b) are adjacent or nearly adjacent,
- soldering a flat metal connector (32) to one of the pairs of ends of the wires or tapes (30a, 30b) located at the side edges on the same side of the sheets (31a, 31b), to establish an electrical connection between said sheets,
- linking to respective connectors (32a, 32b) the respective other ends of the wires or tapes (30a, 30b) located at the side edges on the other side of the sheets (31a, 31b).

2. Method according to claim 1, comprising the following steps:
- forming the electrical insulation of the resistive heating element (3) by two first insulating sheets (41, 42) respectively placed on either side of said resistive heating element so as to sandwich said element, the length and width dimensions of said first insulating sheets (41, 42) are greater than those of said resistive heating element so that the peripheral edges of said resistive heating element are set back from the peripheral edges of said first sheets,
- joining the first insulating sheets (41, 42) together by means of connecting elements (43),
- placing the connecting elements (43) at the peripheral edges of the first sheets (41, 42) projecting outwards from the peripheral edges of the resistive heating element (3), so that said connecting elements are not in contact with said resistive heating element,
- using metal staples as the elements (43) connecting the insulating sheets (41, 42), wherein the staples simultaneously perforate the first insulating sheets (41, 42) and the insulating support sheets (31a, 31b).

3. Method according to one of the preceding claims, comprising the following steps:
- using, as a second layer of electrical insulation, two second insulating sheets (51, 52) respectively placed on either side of the electrically insulated resistive heating element (3) so as to sandwich said element, the length and width dimensions of said second insulating sheets (51, 52) are greater than or equal to those of said electrically insulated resistive heating element (3) so that the peripheral edges of said electrically insulated resistive heating element are set back from the peripheral edges of said second sheets,
- joining the second insulating sheets (13, 14) together by means of connecting elements (53),
- placing the connecting elements (53) are placed at the level of the peripheral edges of the second sheets (51, 52) projecting outwards from the peripheral edges of the electrically insulated resistive heating element (3), so that said connecting elements are not in contact with said electrically insulated resistive heating element,
- using metal staples as the connecting elements (43) between the second insulating sheets (51, 52).

4. Method according to claim 3 taken in combination with claim 2, wherein the metal staples (53) simultaneously perforate the second insulating sheets (51, 52), the first insulating sheets (41, 42) and the insulating support sheets (31a, 31b).

5. Method according to claim 4, comprising a step consisting of bonding the second insulating sheets (51, 52) to the first insulating sheets (41, 42) with an adhesive.

6. Method according to one of the preceding claims, comprising a step consisting of creating a recess (212) in the inside wall of each of the cast iron plates (200a, 200b), said recesses being placed side by side, after said plates have been joined together, to form an arrangement housing the electrically insulated resistive heating element (3).

7. Method according to claim 6, wherein the depth of the recesses (212) is at most equal to, preferably less than, half the thickness of the electrically insulated resistive heating element (3).

8. Method according to one of the preceding claims, comprising a step consisting of joining the two cast iron plates (200a, 200b) together with an adhesive (211) placed on the inside edge of said plates.

9. Method according to claim 8, wherein the adhesive is a soft silicone seal, placed continuously or intermittently along the inside peripheral edges of the cast iron plates (200a, 200b).

10. Method according to claim 2, consisting of stapling together three of the four edges of the first insulating sheets (41, 42) so as to form a pocket, pouch or liner within which the resistive heating element (3) is inserted, then stapling the fourth edge of said first insulating sheets (41, 42) to close the assembly and hold the resistive heating element (3) in position, trapped and clamped between said first insulating sheets.

11. Method according to claims 2 and 3, consisting of stapling together three of the four edges of the second insulating sheets (51, 52) so as to form a pocket, pouch or liner within which the resistive heating element (3) insulated by the first insulating sheets (41, 42) is inserted, then stapling the fourth edge of said second insulating sheets to close the assembly.
